# EUROPÄISCHE PATENTSCHRIFT

(11) **EP 1 175 307 B1**
(45) Veröffentlichungstag und Bekanntmachung des Hinweises auf die Patenterteilung: **23.07.2003**
(21) Anmeldenummer: 01903709.2
(22) Anmeldetag: 07.02.2001
(51) Int. Cl.: B60G 21/10, B60G 21/055

(54) **HYDRAULISCHES STABILISIERUNGSSYSTEM**
HYDRAULIC ANTI-ROLL SYSTEM
SYSTEME DE STABILISATION HYDRAULIQUE

(30) Priorität: 01.03.2000 DE 10009918
(43) Veröffentlichungstag der Anmeldung: 30.01.2002
(73) Patentinhaber: Bayerische Motoren Werke Aktiengesellschaft, 80809 München (DE)
(72) Erfinder: BRUNS, Hartmut, 81929 München (DE); NAGY, Imre, 85386 Eching (DE); VAN DER KNAAP, Albert, NL-2924 TM Krimpen aan den Ijssel (NL); BENEDEK, Andreas, 85716 Unterschleissheim (DE)
(86) Internationale Anmeldenummer: EP0101298
(87) Internationale Veröffentlichungsnummer: WO01064464

(56) Entgegenhaltungen:
- DE-A- 3 632 416
- DE-A- 4 327 044
- DE-A- 19 549 385
- DE-A- 19 649 187
- DE-C- 19 846 394
- DE-U- 29 619 567
- FR-A- 2 732 649
- US-A- 4 844 506

## Beschreibung

Die Erfindung betrifft ein hydraulisches Stabilisierungssystem insbesondere für ein Fahrwerk eines Fahrzeugs, welches einen Tank für Hydraulikflüssigkeit und eine Pumpe aufweist, die über entsprechende Hydraulikleitungen mit Vorder- und Hinterachs-Aktuatoren verbunden sind, wobei den Aktuatoren ein Richtungsventil vorgeschaltet ist und wobei der Druck am Vorderachs-Aktuator derart regelbar ist, daß er größer oder gleich dem Druck am Hinterachs-Aktuator ist. Zum Stand der Technik wird neben dem deutschen Gebrauchsmuster 296 19 567 auf die DE 196 49 187 A1 verwiesen.

Aus dem Stand der Technik sind hydraulische Stabilisierungssysteme für Fahrzeuge bekannt, die dazu dienen, die Fahrzeug-Federung zu verhärten, insbesondere wenn die einer Achse zugeordneten Räder einseitig ein- und ausfedern. Dadurch kann ein Wanken oder Rollen des Fahrzeugs vermieden werden. Die bekannten Stabilisierungssysteme weisen dabei Aktuatoren, insbesondere hydraulische Schwenkmotoren, auf, die mit jeweils zwei Stabilisatorabschnitten so zusammenwirken, daß eine gegenseitige Verdrehung bewirkt wird. Die damit erzeugten Drehmomente wirken einer Einfederung eines mit dem Quer-Stabilisator verbundenen Rades entgegen.

Die gattungsgemäße Offenlegungsschrift DE 196 49 187 A1 beschreibt beispielsweise eine solche hydraulische Stabilisierungseinrichtung mit einem zwischen einer Druckleitung und einer Tankleitung angeordnetem Schaltventil. Das Schaltventil ist dabei jeweils aus einer Neutralstellung in eine erste und zweite Schaltstellung verstellbar, in der die Vorlauf- oder Druckleitung mit einer ersten Arbeitskammer und die Rücklauf- oder Tankleitung mit einer zweiten Arbeitskammer eines Aktuators bzw. umgekehrt verbunden ist. Ferner ist ein Druckbegrenzungsventil oder Druckregelventil parallel zu dem Schaltventil zwischen der Druckleitung und der Tankleitung angeordnet. In der Neutralstellung verbindet das Schaltventil die Druckleitung mit der Tankleitung.

Das Gebrauchsmuster DE 296 19 567 U beschreibt ein ähnliches Stabilisierungssystem zur Rollstabilisierung eines Fahrzeugs, das jeweils einen Vorderachs- und einen Hinterachs-Aktuator aufweist, die jeweils durch einen Schwenkmotor mit zwei Arbeitskammern gebildet sind, in die jeweils eine Hydraulikleitung mündet. Um eine Rollstabilisierung zu bewirken, ist über eine Reihenschaltung eines sog. Fail-Safe-Ventils oder Sicherheitsventiles und eines dort sog. Umschaltventiles eine Hydraulikleitung mit einer Vorlaufleitung und die andere Hydraulikleitung mit einer Rücklaufleitung des Aktuators verbindbar. Hierzu ist das Fail-Safe-Ventil durch entsprechende Ansteuerung aus seiner stromlosen Sperrstellung in eine die beiden Hydraulikleitungen öffnende Durchlaßstellung zu verstellen und das Umschaltventil in die eine oder andere Lage zu verlagern, in der die eine Hydraulikleitung mit der Vorlaufleitung und die andere Hydraulikleitung mit der Rücklaufleitung verbunden wird. Die Funktion des Sicherheitsventiles oder Fail-Safe-Ventiles besteht dabei darin, bei einem Ausfall des hydraulischen Stabilisierungssystemes und insbesondere des Umschaltventiles, d.h. des Druckregelventiles an der Vorderachse, dieses System in einen definierten Funktionszustand zu überführen.

Bei diesem bekannten Stand der Technik ist für jeden Aktuator ein eigenes Sicherheits- bzw. Fail-Safe -Ventil unmittelbar stromauf desselben, d.h. zwischen dem zugeordneten Umschalt- oder Richtungsventil und dem Aktuator angeordnet. Dies stellt nun einerseits einen hohen Aufwand dar. Ferner kann ungünstigstenfalls das wichtigere Sicherheitsventil des Vorderachs-Aktuators unerwünschterweise in seiner die Verbindung zwischen Aktuator und Pumpe unterbrechenden Position verharren - ( befinden sich die Klemmen dieses Ventiles in Mittelstellung, so sind alle Anschlüsse getrennt ) -, was zur Folge hätte, daß der Hydraulikdruck im Vorderachs-Aktuator erheblich geringer als derjenige im Hinterachs-Aktuator wäre. Es würde somit unbemerkterweise an der Hinterachse der gewünschte wirksame Aktuatordruckunterschied eingestellt, an der Vorderachse aber entweder ein zu kleiner Druckunterschied oder ein kleinerer Druckunterschied als an der Hinterachse erreicht werden. Der Druck an der Vorderachse sollte jedoch immer größer oder gleich dem Druck an der Hinterachse sein, wie in der DE 196 49 187 A1 beschrieben.

Der vorliegenden Erfindung liegt daher die Aufgabe zugrunde die vorgenannten Nachteile der hydraulischen Stabilisierungssysteme vom Stand der Technik zu vermeiden und ein verbessertes Stabilisierungssystem zur Verfügung zu stellen. Dabei soll das verbesserte Stabilisierungssystem eine sichere Funktion und eine kostengünstige Herstellung und Montage ermöglichen.
Diese Aufgabe wird durch ein hydraulisches Stabilisierungssystem mit den Merkmalen des Patentanspruchs 1 gelöst. Vorteilhafte Ausgestaltungen der Erfindung werden in den Unteransprüchen beschrieben.

Durch die vorliegende Erfindung wird ein verbessertes hydraulisches Stabilisierungssystem zur Verfügung gestellt, das durch die entsprechende Anordnung des vorzugsweise einzigen und nunmehr in besonders günstiger Weise angeordneten Fail-Safe-Ventils eine besonders sichere Funktion und eine kostengünstige Herstellung und Montage ermöglicht. Das Fail-Safe-Ventil wird dem sog. Richtungsventil oder Umschaltventil vorgeschaltet, so daß zwischen diesen beiden Schaltventilen lediglich eine Leitung unter Systemdruck steht. Im Fehlerfall, d.h. wenn beispielsweise das Druckregelventil der Vorderachse oder das Richtungsventil in geschlossener Stellung hängt, wird das Fail-Safe-Ventil stromlos geschaltet und es wird ein Umlaufstrom von der Pumpe zum Tank sichergestellt.

Da nur eine Leitung unter Systemdruck steht, kann nun mittels eines einzigen in dieser unter Systemdruck stehenden Vorderachs-Vorlaufleitung vorgesehenen Drucksensors überprüft werden, ob dem Anfordernis, daß der Druck am Vorderachs-Aktuator zumindest ebenso hoch wie derjenige am Hinterachs-Aktuator ist, Genüge getan ist. Selbstverständlich sollte hierfür auch der Druck am Hinterachs-Aktuator an geeigneter Stelle meßbar sein, d.h. mit Hilfe eines Druckvergleichs Vorderachsdruck zu Hinterachsdruck kann dann auf eine defekte Ansteuerung des Fail-Safe-Ventils geschlossen werden.

Ein Nachsaugen von Hydraulikmedium ist im Falle eines gesperrten Fail-Safe-Ventiles durch bzw. für den Vorderachs-Aktuator über ein Rückschlagventil bzw. über eine gedrosselte Tankleitung möglich. Diese Drossel kann dabei entsprechend der Ergebnisse der Fahrwerksabstimmung definiert werden. Schaltet das Fail-Safe-Ventil ungewollt nicht in die richtige Position, übernimmt das Rückschlagventil und/oder die gedrosselte Tankleitung die Funktion, daß der Druck an der Vorderachse größer bzw. nur kurzzeitig geringfügig kleiner als der Druck an der Hinterachse wird. Um diesen Fehlerfall erfassen zu können, muß der Drucksensor für den Vorderachskreis zwischen Fail-Safe-Ventil und sog. Richtungsventil angeordnet sein.

Generell wird mit einem erfindungsgemäßen hydraulischen Stabilisierungssystem insbesondere auch in Sperrstellung des Fail-Safe-Ventiles das Entstehen von Lufteinschlüssen im System und dadurch Kavitation in den Aktuatorkammern vermieden. Durch die entsprechende Anordnung des Fail-Safe-Ventils und das Vorsehen von entsprechenden Drucksensoren ist das Stabilisierungssystem zur Erkennung der Funktion des Fail-Safe-Ventils durch Plausibilitätsüberwachung von Drucksignalen in besonders vorteilhafter Weise geeignet. Ferner wird durch das Vorsehen von Drucksensoren in den Leitungen zu den Aktuatoren sichergestellt, daß der Druck an der Vorderachse immer größer oder gleich dem Druck an der Hinterachse ist. Gegenüber dem aus der DE 296 19 567 U 1 bekannten Stand der Technik kann hier im übrigen auf ein zusätzliches Rückschlagventil verzichtet werden. Ferner kann, insbesondere zu Diagnosezwecken auch zwischen der Pumpe und dem Fail-Safe-Ventil ein zusätzlicher Drucksensor vorgesehen sein.

Weitere Ausgestaltungen und Vorteile der Erfindung werden durch die Beschreibung der Ausführungsbeispiele unter Bezugnahme auf die beigefügten Zeichnungen erläutert. Darin zeigen:
- Figur 1: ein schematisches Schaltbild einer stromlosen Stabilisierungsvorrichtung gemäß der vorliegenden Erfindung;
- Figur 2: ein schematisches Schaltbild der Stabilisierungsvorrichtung aus Figur 1 mit geöffnetem Fail-Safe-Ventil;
- Figur 3: eine alternative Ausführungsform einer stromlosen Stabilisierungsvorrichtung gemäß der vorliegenden Erfindung;

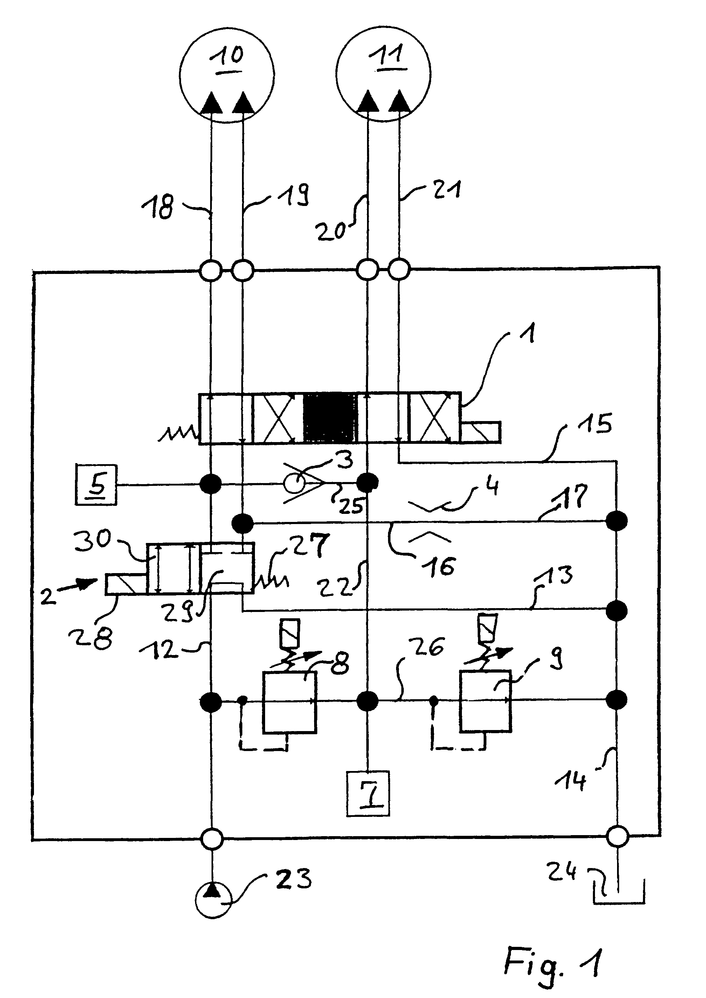

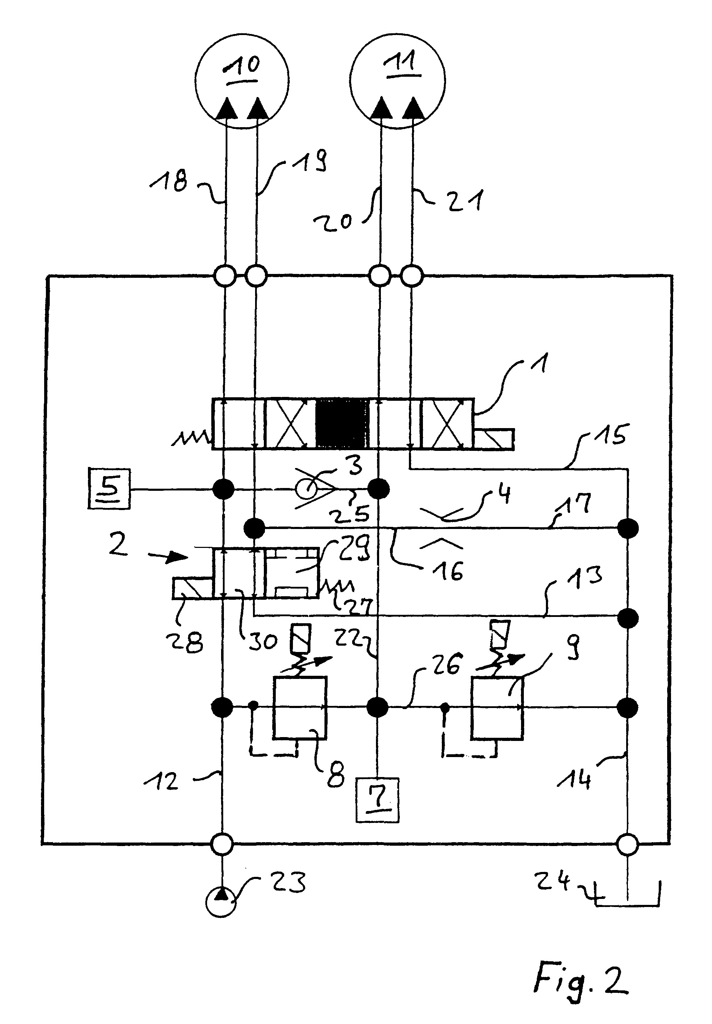

Figuren 1 und 2 zeigen eine erste Ausführungsform eines erfindungsgemäßen Stabilisierungssystems, wobei sich ein Richtungsventil 1 im bestromten Zustand, d.h. in durchgeschalteter Stellung befindet. Dabei regelt das erfindungsgemäße Stabilisierungssystem die Zufuhr von Hydraulikflüssigkeit aus einem Tank 24 zu einem Vorderachs-Aktuator 10 und einem Hinterachs-Aktuator 11, die jeweils das Feder-Dämpfer Verhalten der Vorderachse bzw. der Hinterachse eines Fahrzeuges bei einseitiger Anregung variieren. Die Hydraulikflüssigkeit wird dabei von einer Pumpe 23 über eine Vorlaufleitung 12 zu einem als Sicherheitsventil fungierenden sog. Fail-Safe-Ventil 2 gefördert.

Das Fail-Safe-Ventil 2 besitzt zwei Stellungen, nämlich eine Sperrstellung 29 und eine Durchlaßstellung 30. Über eine Druckfeder 27 wird das Fail-Safe-Ventil 2 in stromlosem Zustand in seiner Sperrstellung gehalten. In Strom beaufschlagter Stellung wird es durch einen Elektromagneten 28 in Durchlaßstellung gehalten, wie in Figur 2 dargestellt. In der stromlosen Sperrstellung gelangt die von der Pumpe 23 geförderte Hydraulikflüssigkeit über eine Vorlaufleitung 12 in eine Rücklaufleitung 13 und läuft dort über eine Rücklaufleitung 14 in den Tank 24 zurück.

Ferner ist zwischen der Pumpe 23 und dem Fail-Safe-Ventil 2 eine Abzweigung vorhanden, über die Hydraulikflüssigkeit über ein Druckregelventil 8 zu einer weiteren Verzweigung gelangt. An dieser Verzweigung beginnt die Vorlaufleitung 22 für die Hinterachse, wobei der hierfür relevante Druck von einem nachgeschalteten Druckregelventil 9, das ebenso wie das Druckregelventil 8 als Proportional-Druckbegrenzungsventil ausgebildet ist, eingestellt wird. Mittels der Druckregelventile 8 und 9 wird der an den Vorderachs-Aktuator 10 anzulegende Hydraulikdruck eingestellt.

An der Verzweigung zwischen den beiden Druckregelventilen 8, 9 ist ein Drucksensor 7 für die Messung des dem Hinterachs-Aktuator 11 angebotenen Druckniveaus angeordnet. Ferner ist in bzw. an der bei geöffnetem Fail-Safe-Ventil 2 seitens der Pumpe 23 mit Hydraulikdruck beaufschlagten Vorderachs-Vorlaufleitung 12 zwischen dem Fail-Safe-Ventil 2 und einem Richtungsventil 1 ein Vorderachs-Drucksensor 5 vorgesehen.

Üblicherweise wird nach Inbetriebnahme des Fahrzeuges das Fail-Safe-Ventil 2 geöffnet, wonach sowohl der Vorderachs-Aktuator 10 als auch der Hinterachs-Aktuator 11 in gewünschter Weise mit Hydraulikmedium entsprechend dem mittels der Druckregelventile 8, 9 eingestellten Druckniveaus beaufschlagt werden können. In welcher Richtung diese Aktuatoren 10, 11 dabei beaufschlagt werden, - d.h. im Falle hydraulischer Schwenkmotoren als Aktuatoren welche der beiden zueinander komplementären Arbeitskammern jedes Schwenkmotors beaufschlagt werden - wird dabei durch die unterschiedliche Position bzw. geeignete Positionierung bzw. Schaltung des (an sich bekannten) Richtungsventiles 1 bestimmt.

Wenn irgendeine Störung im System auftritt und als solche erkannt wird - insbesondere durch Überwachung bzw. Auswertung der Signale der beiden Drucksensoren 5, 7, so wird das Fail-Safe-Ventil 2 geschlossen, d.h. in eine die Vorderachs-Vorlaufleitung 12 unterbrechende Position gebracht, die in Fig.1 dargestellt ist. Wie bereits erläutert, wird das Fail-Safe-Ventil hierfür nicht bestromt, so daß dieses vorteilhafterweise auch bei einer unerwünschten Unterbrechung seiner Stromversorgung in diese sog. Fail-Safe-Position gelangt.

Wie ersichtlich wird, gelangt im Falle des geschlossenen Fail-Safe-Ventils 2 Hydraulikflüssigkeit mit dem gleichen Druck wie dem für die Hinterachse vorgesehenen in eine Saugleitung 25, wo sie über ein Rückschlagventil 3 in eine Vorderachs-Aktuator-Leitung 18 bzw. 19 je nach Stellung des Richtungsventil 1 gelangen kann. Bei geschlossenem Fail-Safe-Ventil 2 gelangt somit Hydraulikflüssigkeit unter gleichem Druckniveau über die Hinterachs-Aktuator-Leitung 20 oder 21 zum Hinterachs-Aktuator 11 als auch (in Abhängigkeit von der Position des Richtungsventiles 1) über die Vorderachs-Aktuator-Leitung 18 oder 19 zum Vorderachs-Aktuator 10, so daß sichergestelt ist, daß der an den Vorderachs-Aktuator 10 angelegte Druck zumindest ebenso hoch ist wie der an den Hinterachs-Aktuator 11 angelegte Hydraulikdruck. Dabei ist dieser Zustand vorteilhafterweise immer dann gewährleistet, wenn das Fail-Safe-Ventil 2 geschlossen ist, d.h. wenn dieses die Vorderachs-Vorlaufleitung 12 unterbricht; sei es nun, daß das Fail-Safe-Ventil 2 diese erwünschtermaßen einnimmt oder unerwünschtermaßen, d.h. aufgrund eines Funktionsfehlers.

Unabhängig von der Position des Fail-Safe-Ventiles 2 und somit auch im in Fig.1 dargestellten Zustand kann über eine Rücklaufleitung 15 die vom Hinterachs-Aktuator 11 zurücklaufende Hydraulikflüssigkeit zu einer Rücklaufleitung 14 und von hier in den Tank 24 gelangen. Die vom Vorderachs-Aktuator 10 zurücklaufende Hydraulikflüssigkeit gelangt über eine sog. Drosselleitung 16 und eine darin vorgesehene Drossel 4 über die sich hieran anschließende Drosselleitung 17 in die Rücklaufleitung 14. Über diese Drosselleitungen 16, 17 mit geeignet dimensionierter Drossel 4 kann im übrigen bei geschlossenem, d.h. die Vorderachs-Vorlaufleitung 12 unterbrechendem Fail-Safe-Ventil 2 Hydraulikmedium aus dem Tank 24 in die jeweils zugeschaltete Kammer des Aktuators 10 gelangen, falls dort Unterdruck herrschen sollte, so daß Kavitation ausgeschlossen ist.

Bei der in Figur 2 gezeigten Stellung des Fail-Safe-Ventils 2 ist der Elektromagnet 28 mit Strom beaufschlagt, so daß das Fail-Safe-Ventil 2 geöffnet ist. Hierdurch kann Hydraulikflüssigkeit mit einem Druck, der aufgrund des Druckabfalls am Druckregelventil 8 höher ist, als der an der Hinterachse, zu dem Vorderachs-Aktuator 10 gelangen, was den üblichen Funktionszustand darstellt. Selbstverständlich wird hierdurch ein Öffnen des Rückschlagventil 3 verhindert, d.h. über die Saugleitung 25 erfolgt kein Austausch von Hydraulikmedium zwischen der Hinterachs-Vorlaufleitung 22 und der Vorderachs-Vorlaufleitung 12.

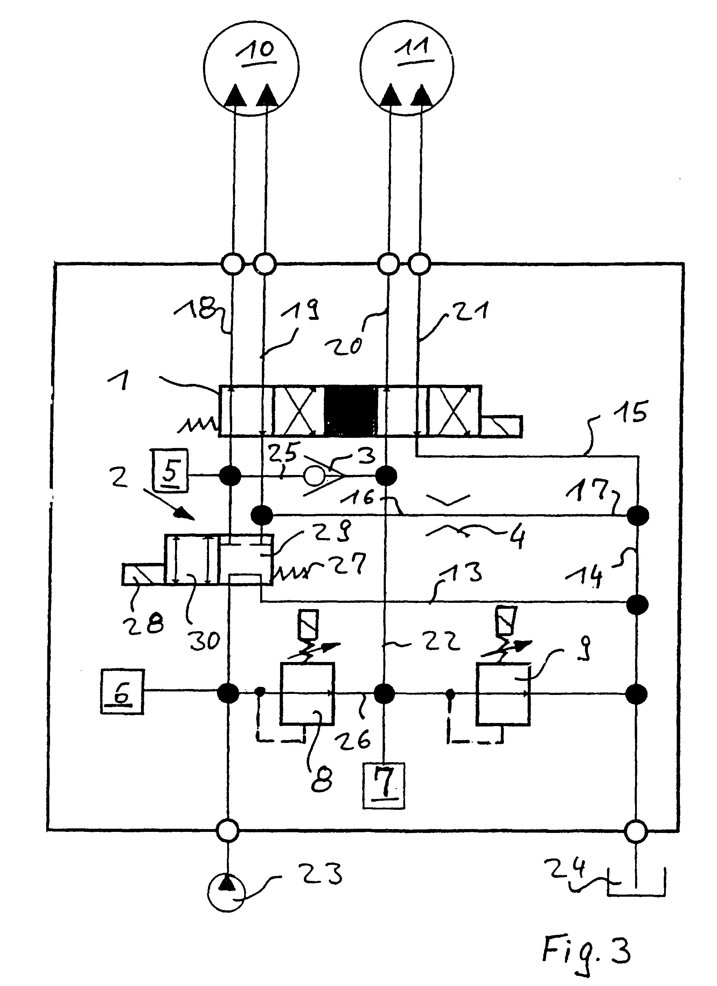

Figur 3 zeigt eine alternative Ausführungsform der vorliegenden Erfindung, bei der gleiche Bauteile mit gleichen Bezugszeichen versehen sind. Gegenüber der Ausführungsform in den Figuren 1 und 2 ist hier ein zusätzlicher Drucksensor 6 zwischen der Pumpe 23 und dem Fail-Safe-Ventil 2 angeordnet. Ansonsten entspricht die Funktionsweise der unter Figur 1 und 2 beschriebenen. Mit Hilfe dieses Drucksensors 6 ist eine Eigendiagnose möglich, wobei mit geschlossenem, d.h. stromlosen Fail-Safe-Ventil 2 die Funktion des Druckregelventiles 8 überwacht bzw. überprüft werden kann, ohne daß das Fahrzeug aktiv wankt.

Durch die Schaltungen gemäß der vorteilhaften Ausführungsformen nach Figuren 1 bis 3 wird eine Möglichkeit für eine Plausibilitätsüberwachung geschaffen, bei der gegenüber dem Stand der Technik kein zusätzlicher Mehraufwand entsteht, wobei noch darauf hingewiesen sei, daß durchaus eine Vielzahl von Details abweichend vom gezeigten Ausführungsbeispiel gestaltet sein kann, ohne den Inhalt der Patentansprüche zu verlassen.

### BEZUGSZEICHEN

- 1: Richtungsventil
- 2: Fail-Safe-Ventil
- 3: Rückschlagventil
- 4: Drossel
- 5: Vorderachs-Drucksensor
- 6: Vorderachs-Drucksensor
- 7: Hinterachs-Drucksensor
- 8: Druckregelventil Vorderachse
- 9: Druckregelventil Hinterachse
- 10: Vorderachs-Aktuator
- 11: Hinterachs-Aktuator
- 12: Vorlaufleitung Vorderachse
- 13: Rücklaufleitung
- 14: Rücklaufleitung
- 15: Rücklaufleitung
- 16: Drosselleitung
- 17: Drosselleitung
- 18: Vorderachs-Aktuator-Leitung
- 19: Vorderachs-Aktuator-Leitung
- 20: Hinterachs-Aktuator-Leitung
- 21: Hinterachs-Aktuator-Leitung
- 22: Vorlaufleitung Hinterachse
- 23: Pumpe
- 24: Tank
- 25: Saugleitung
- 26: Druckleitung
- 27: Druckfeder
- 28: Elektromagnet
- 29: Sperrstellung
- 30: Durchlaßstellung

## Patentansprüche

1. Hydraulisches Stabilisierungssystem, insbesondere für ein Fahrwerk eines Fahrzeugs, welches einen Tank (24) für Hydraulikflüssigkeit und eine Pumpe (23) aufweist, die über entsprechende Hydraulikleitungen (12, 13, 14, 15, 16, 17, 18, 19, 20, 21, 22, 25, 26) mit Vorder- und Hinterachs-Aktuatoren (10, 11) verbunden sind, wobei den Aktuatoren ein Richtungsventil (1) vorgeschaltet ist und der Druck am Vorderachs-Aktuator (10) derart regelbar ist, daß er größer oder gleich dem Druck am Hinterachs-Aktuatore ist, mit Drucksensoren (5, 7) zur Überwachung des den Aktuatoren (10, 11) zur Verfügung stehenden Hydraulikdrucks, **dadurch gekennzeichnet, daß** zwischen der Pumpe (23) und dem Richtungsventil (1) für den Vorderachs-Aktuator (10) ein Fail-Safe-Ventil (2) vorgesehen ist und daß der dem Vorderachs-Aktuator (10) zugeordnete Drucksensor (5) zwischen dem Fail-Safe-Ventil (2) und dem Richtungsventil (1) in der Vorderachs-Vorlaufleitung (12) vorgesehen ist.

2. Hydraulisches Stabilisierungssystem nach Anspruch 1,
**dadurch gekennzeichnet, daß**
das Fail-Safe-Ventil (2) eine Durchlaßstellung (30) und eine Sperrstellung (29) aufweist.

3. Hydraulisches Stabilisierungssystem nach Anspruch 1 oder 2,
**dadurch gekennzeichnet, daß**
zwischen dem Fail-Safe-Ventil (2) und dem Richtungsventil (1) eine abgehende Drosselleitung (16) mit einer Drossel (4) vorgesehen ist.

4. Hydraulisches Stabilisierungssystem nach einem der vorangehenden Ansprüche,
**dadurch gekennzeichnet, daß**
zwischen dem Fail-Safe-Ventil (2) und dem Richtungsventil (1) eine abgehende Saugleitung (25) mit einem Rückschlagventil (3) vorgesehen ist.

5. Hydraulisches Stabilisierungssystem nach Anspruch 1 bis 4,
**dadurch gekennzeichnet, daß**
zwischen der Pumpe (23) und dem Fail-Safe-Ventil (2) ein Drucksensor (6) vorgesehen ist.

6. Hydraulisches Stabilisierungssystem nach einem der vorangehenden Ansprüche,
**dadurch gekennzeichnet, daß**
zwischen der Pumpe (23) und den Hinterachs-Aktuatoren (11) ein Druckregelventil (8) und zwischen diesem und dem Hinterachs-Aktuator (11) ein Drucksensor (7) angeordnet ist.

## Claims

1. A hydraulic anti-roll system especially for a running gear of a vehicle, which has a tank (24) for hydraulic fluid and a pump (23) which are joined via suitable hydraulic lines (12, 13, 14, 15, 16, 17, 18, 19, 20, 21, 22, 25, 26) with front and rear axle actuators (10, 11) in which a direction control valve (1) is connected in series before the actuators and the pressure on the forward actuator (10) can be regulated in such a manner that it is greater than or equal to the pressure on the rear axle actuator, with pressure sensors (5, 7) to monitor the hydraulic pressure available at the actuators(10, 11) **characterised in that** between the pump (23) and the directional control valve (1) for the forward axle actuator (10) a fail-safe valve (2) is provided and **in that** the pressure sensor (5) associated with the front axle actuator (10) is provided between the fail-safe valve (2) and the directional control valve (1) in the front axle supply line (12).

2. A hydraulic anti-roll system according to claim 1, **characterised in that** the fail-safe valve (2) has a throughput position (30) and a barred position (29).

3. A hydraulic anti-roll system according to Claim 1 or Claim 2 **characterised in that** an outgoing throttle line (16) with a throttle (4) is provided between the fail-safe valve (2) and the directional control valve (1).

4. A hydraulic anti-roll system according to one of the foregoing claims **characterised in that** an outgoing suction line (25) with a non-return valve (3) is provided between the fail-safe valve (2) and the directional control valve (1).

5. A hydraulic anti-roll system according to claims 1 to 4 **characterised in that** between the pump (23) and the fail-safe valve (2) a pressure sensor (6) is provided.

6. A hydraulic anti-roll system according to one of the foregoing claims, **characterised in that** a pressure regulating valve (8) is arranged between the pump (23) and the rear axle actuators (11) and between this and the rear axle actuator (11) a pressure sensor (7) is arranged.

## Revendications

1. Système de stabilisation hydraulique notamment pour le châssis d'un véhicule comprenant un réservoir (24) de liquide hydraulique et une pompe (23) reliée par des conduites hydrauliques appropriées (12, 13, 14, 15, 16, 18, 19, 20, 21, 22, 25, 26) reliées à des actionneurs d'essieu avant et arrière (10, 11), avec une vanne directionnelle (1) prévue en amont des actionneurs, dont la pression de l'actionneur de l'essieu avant (10) est régulée pour être supérieure ou égale à la pression de l'actionneur de l'essieu arrière, et avec
des capteurs de pression (5, 7) pour surveiller la pression hydraulique disponible aux actionneurs (10, 11),
**caractérisé en ce que**
entre la pompe (23) et la vanne directionnelle (1) de l'actionneur d'essieu avant (10) on a une vanne de sécurité (2), et
le capteur de pression (5) associé à l'actionneur d'essieu avant (10) est prévu entre la vanne de sécurité (2) et la vanne directionnelle (1) dans la conduite d'allée de l'essieu avant (12).

2. Système de stabilisation hydraulique selon la revendication 1,
**caractérisé en ce que**
la vanne de sécurité (2) présente une position de passage (30) et une position de blocage (29).

3. Système de stabilisation hydraulique selon la revendication 1 ou 2,
**caractérisé par**
une conduite d'étranglement (16) munie d'un organe d'étranglement (4) installé entre la vanne de sécurité (2) et la vanne directionnelle (1).

4. Système de stabilisation hydraulique selon l'une quelconque des revendications précédentes,
**caractérisé par**
une conduite d'aspiration (25) équipée d'un clapet anti-retour (3) entre la vanne de sécurité (2) et la vanne directionnelle (1).

5. Système de stabilisation hydraulique selon l'une des revendications 1 à 4,
**caractérisé par**
un capteur de pression (6) prévu entre la pompe (23) et la vanne de sécurité (2).

6. Système de stabilisation hydraulique selon l'une quelconque des revendications précédentes,
**caractérisé par**
une vanne de régulation de pression (8) prévue entre la pompe (23) et l'actionneur (11) de l'essieu arrière, avec un capteur de pression (7) prévu entre la vanne de régulation de pression et l'actionneur d'essieu arrière (11).
